# EUROPEAN PATENT SPECIFICATION

(11) **EP 2 614 911 B1**
(45) Date of publication and mention of the grant of the patent: **25.09.2019**
(21) Application number: 12194612.3
(22) Date of filing: 28.11.2012
(51) Int. Cl.: B27B 19/00

(54) **jigsaw**
stichsäge
scie sauteuse

(30) Priority: 13.01.2012 JP 2012005303
(43) Date of publication of application: 17.07.2013
(73) Proprietor: Makita Corporation, Anjo, Aichi 446-8502 (JP)
(72) Inventor: Hayashi, Masanori, Anjo, Aichi 446-8502 (JP); Yamamura, Go, Anjo, Aichi 446-8502 (JP); Kani, Toshiyuki, Anjo, Aichi 446-8502 (JP)
(74) Representative: Kramer Barske Schmidtchen Patentanwälte PartG mbB

(56) References cited:
- EP-A2- 1 445 054
- DE-A1-102007 034 529
- JP-A- 2008 044 037
- JP-U- 3 150 345
- US-A1- 2002 170 185
- US-A1- 2007 044 324

## Description

### BACKGROUND OF THE INVENTION

### TECHNICAL FIELD

The present invention relates to cutting tools such as jigsaws according to the preamble of claim 1 and of claim 5 and having a blade protruding downward from a main body containing a motor.

### BACKGROUND ART

A cutting tool such as jigsaw according to the preamble of claim 1 and of claim 5 is disclosed in JP 3-150345 U.

Cutting tools such as jigsaws have a blade protruding downward from a main body containing a motor, and are capable of cutting a workpiece by reciprocating the blade. A base having a rectangular shape as viewed in plan is connected to the lower part of the main body so that the blade perpendicularly extends though the base. The main body can be positioned by placing the base on the workpiece (e.g., Japanese Patent Application Publication No. 2011-218501 (JP 2011-218501 A).

Bases are often formed as small as possible due to the recent demand for lightweight, compact bases. That is, the lateral dimension of the base is designed to match the width of the main body so that the base does not interfere with a cutting operation when the cutting operation is performed at a location such as by the wall etc. The longitudinal dimension of the base is designed to be large enough so that the main body does not fall down. However, reducing the base size in this manner may destabilize the attitude of the main body during the cutting operation. In particular, in the case where the main body is held upside down to cut a workpiece from its back side, the attitude of the main body is invisible, and thus the main body tends to be tilted, thereby resulting in reduction in cutting accuracy due to undesirable movement of the main body. Such reduction in cutting accuracy due to undesirable movement of the main body may occur while a tilted surface is cut.

### SUMMARY OF THE INVENTION

It is the object of the present invention to provide a jigsaw that is capable of stabilizing the attitude of a main body during a cutting operation and that does not reduce cutting accuracy while still implementing a lightweight, compact base.

In order to achieve the above object, in a jigsaw according to claim 1, a base is provided with an auxiliary base. The auxiliary base is capable of being inserted into and pulled out from the base in a plane parallel to a lower surface of the base by moving the auxiliary base between an accommodated position and a pulled-out position. The accommodated position is a position where the auxiliary base is located in an accommodating portion recessed in the lower surface of the base and fits within the base as viewed in plan. The pulled-out position is a position where the auxiliary base protrudes from the accommodating portion to outside of the base.

In order to achieve the above object, in a jigsaw according to claim 5, a part of a base serves as an auxiliary base separate from a main base that is connected to a main body. The auxiliary base is connected to the main base so as to be movable between a first position where the auxiliary base contacts the main base and a second position where the auxiliary base is separated from the main base.

According to the present invention, the attitude of the main body during a cutting operation can be stabilized while still implementing the lightweight, compact base. Moreover, the cutting accuracy can also be maintained.

### BRIEF DESCRIPTION OF THE DRAWINGS

FIG. 1 is a perspective view of a jigsaw according to a first embodiment (auxiliary bases are located at respective accommodated positions).
FIGS. 2A to 2C are illustrations of a base according to the first embodiment (the auxiliary bases are located at the respective accommodated positions), where FIG. 2A is a plan view, FIG. 2B is a side view, and FIG. 2C is a bottom view.
FIG. 3 is a perspective view of the jigsaw according to the first embodiment (the auxiliary bases are located at respective pulled-out positions).
FIGS. 4A to 4C are illustrations of the base according to the first embodiment (the auxiliary bases are located at the respective pulled-out positions), where FIG. 2A is a plan view, FIG. 2B is a side view, and FIG. 2C is a bottom view.
FIGS. 5A to 5C are illustrations of a base according to a second embodiment (an auxiliary base is located at a first position), where FIG. 5A is a plan view, FIG. 5B is a side view, and FIG 5C is a bottom view.
FIGS. 6A is a sectional view taken along line A-A in FIG. 5C, FIG. 6B is a sectional view taken along line B-B in FIG. 5C, and FIG. 6C is a sectional view taken along line C-C in FIG. 5C.
FIGS. 7A to 7C are illustrations of the base according to the second embodiment (the auxiliary base is located at a second position), where FIG. 7A is a plan view, FIG. 7B is a side view, and FIG. 7C is a bottom view.

### DETAILED DESCRIPTION OF THE EMBODIMENTS

Embodiments of the present teachings will be described below with reference to the accompanying drawings.

### [First Embodiment]

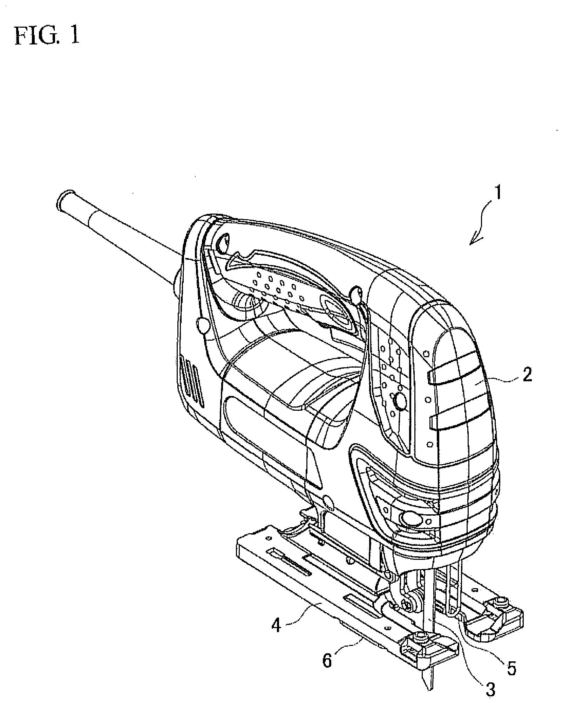

FIG. 1 is a perspective view of a jigsaw as an example of a cutting tool. A jigsaw 1 has a conversion mechanism in the front part (the lower right side in FIG. 1 is the front side) of a main body 2 containing a motor. The conversion mechanism converts rotation of the motor to linear movement of a rod provided in the vertical direction. A blade 3 connected to the lower end of the rod protrudes downward below the main body 2.

A base 4 is connected to the lower part of the main body 2, and has a rectangular shape as viewed in plan. A cutout recess 5 is provided in the central portion of the front side of the base 4, and the blade 3 passes through the cutout recess 5 and extends perpendicular to the cutout recess 5.

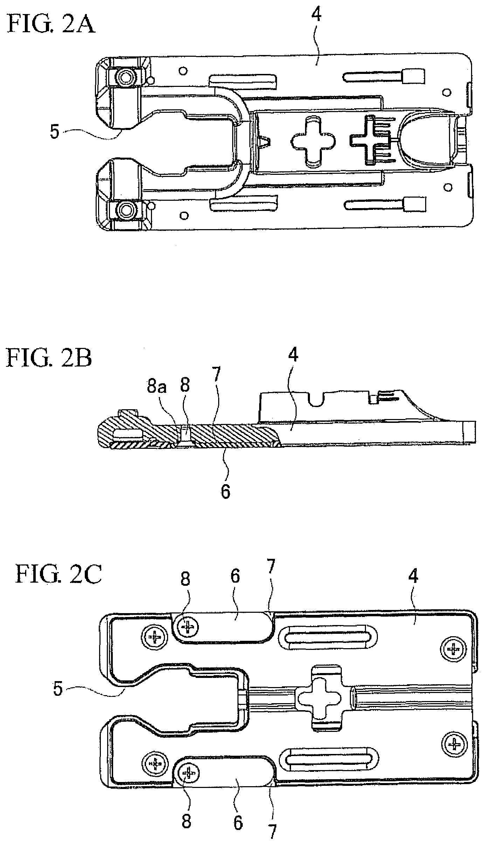

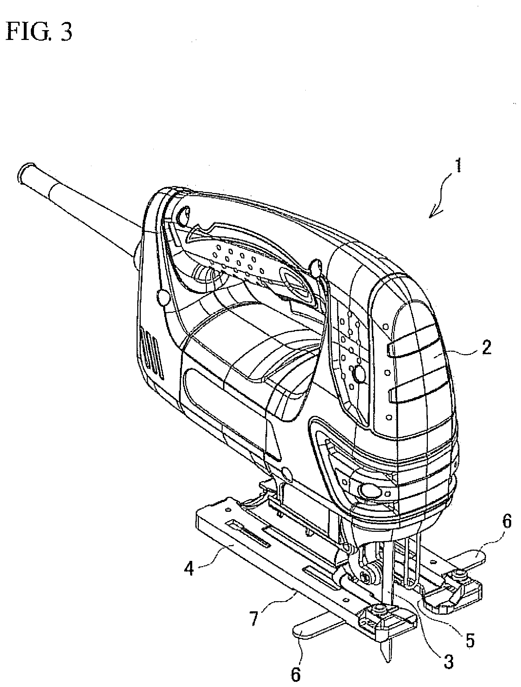

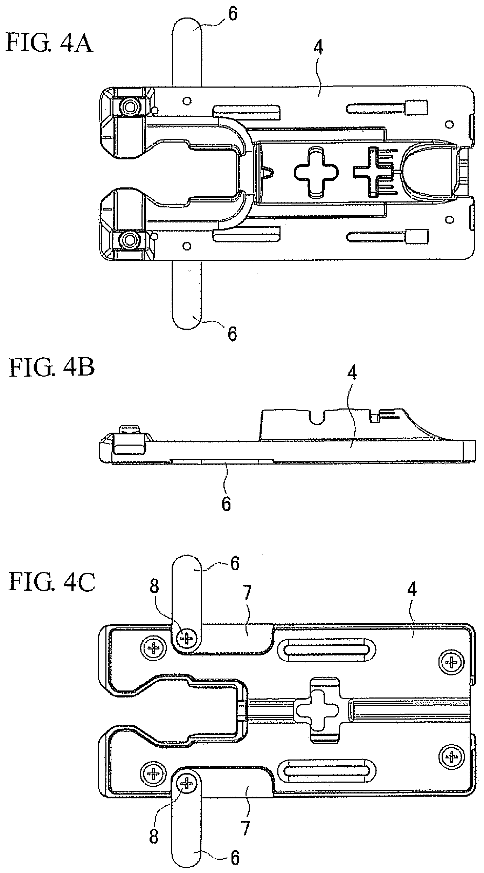

Auxiliary bases 6, 6 are provided on the right and left sides of the base 4. As shown in FIGS. 2B and 2C, the auxiliary base 6 is a plate-like body having an elliptical shape as viewed in plan. An accommodating portion 7 having a shape similar to that of the auxiliary base 6 is provided on a laterally outer side of the cutout recess 5. The accommodating portion 7 is provided so as to be recessed in the bottom surface of the base 4 and to be open at the side edge of the base 4. The front end of the auxiliary base 6 is attached to the base 4 in the accommodating portion 7 via a countersunk head screw 8 so that the auxiliary base 6 is rotatable. Thus, the auxiliary base 6 is rotatable between an accommodated position of FIGS. 2A to 2C where the auxiliary base 6 fits in the accommodating portion 7 and hides in the base 4 as viewed in plan, and a pulled-out position of FIGS. 3 and FIGS. 4A to 4C where the auxiliary base 6 protrudes from the accommodating portion 7 so as to protrude perpendicularly beyond the side edge of the base 4. Since the auxiliary base 6 has substantially the same thickness as the accommodating portion 7, the lower surface of the auxiliary base 6 is flush with the lower surface of the base 4. An O-ring 8a is provided on the countersunk head screw 8 so as to contact the upper surface of the auxiliary base 6, and restricts unexpected rotation of the auxiliary base 6 at the accommodated position and the pulled-out position.

As shown in FIGS. 3 and FIGS. 4A to 4C, in the jigsaw 1 configured as described above, the shape of the base 4 as viewed in plan can be expanded in the lateral direction by pulling out the auxiliary bases 6, 6 from the base 4 to the pulled-out position. Thus, the attitude of the main body 2 can be stably maintained by the right and left auxiliary bases 6, 6 when placing the base 4 on a workpiece and cutting the workpiece 4 while sliding the base 4. In particular, when the jigsaw 1 is turned upside down to cut the workpiece from its back surface side, the main body 2 can be stably moved with the auxiliary bases 6, 6 pulled out, even if the jigsaw 1 is not visible. This configuration thus reduces the possibility that the main body 2 is tilted.

As described above, according to the jigsaw 1 of the first embodiment, the base 4 is provided with the auxiliary bases 6, 6 each capable of being inserted into and pulled out from the base 4 in a plane parallel to the lower surface of the base 4 by moving the auxiliary base 6 between the accommodated position where the auxiliary base 6 is located in the accommodating portion 7 recessed in the lower surface of the base 4 and fits within the base 4 as viewed in plan, and the pulled-out position where the auxiliary base 6 protrudes from the accommodating portion 7 to the outside of the base 4. Thus, the attitude of the main body 2 during a cutting operation can be stabilized while the lightweight, compact base 4 is still implemented. Accordingly, cutting accuracy can also be maintained.

In the first embodiment, the area of the auxiliary base may be increased by increasing the length of the auxiliary base or by forming the auxiliary base in a shape other than the elliptical shape, such as a sector shape, a square shape, a rectangular shape, or a circular shape, as viewed in plan. In such case, the shape of the accommodating portion is changed according to the shape of the auxiliary base. The present teachings are not limited to the configuration in which a single pair of right and left auxiliary bases is provided on the base. The auxiliary bases may be provided at four positions, namely, two pairs of auxiliary bases may be provided on the right and left sides of the base 4 at the front and rear parts thereof. Alternatively, at least one auxiliary base may be provided at the front end and/or the rear end of the base. The positions and the number of auxiliary bases can be changed as appropriate.

As a restricting unit that restricts rotation of the auxiliary base in the pulled-out position, an element such as a protrusion that protrudes from the bottom surface of the accommodating portion and engages with the side edge of the auxiliary base in the pulled-out position may be provided instead of the O-ring.

### [Second Embodiment]

Another embodiment of the present teachings will be described below. Constitutional elements that are same as those of the first embodiment are denoted with the same reference characters, and description thereof will be omitted.

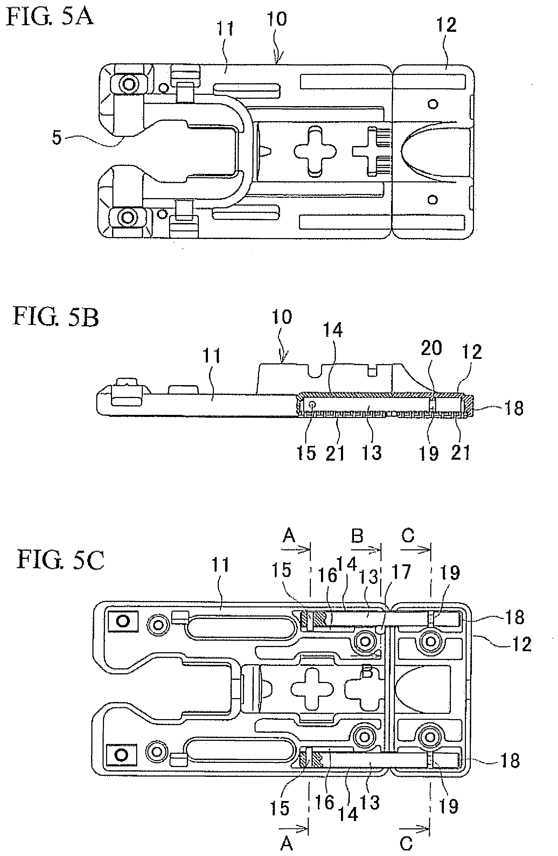

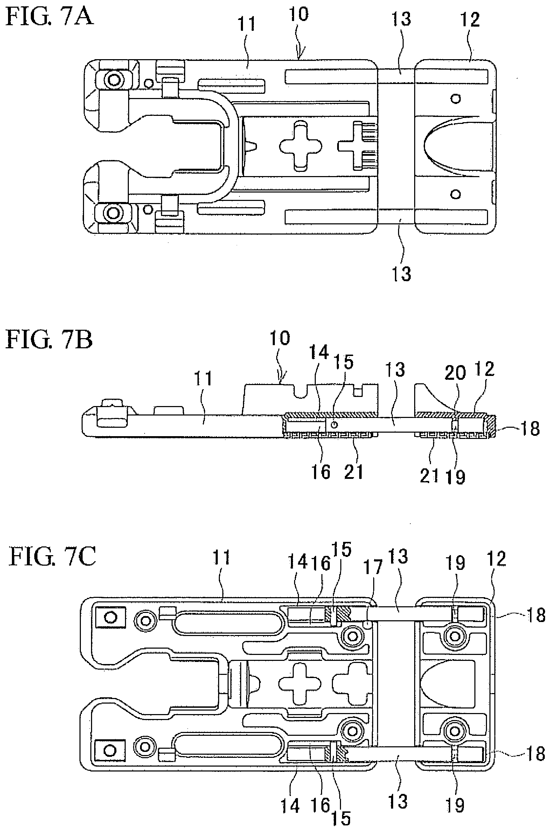

A base 10 shown in FIGS. 5A to 7C is divided into two parts, namely a front main base 11 and a rear auxiliary base 12. The main base 11 is connected to the main body 2, the rear auxiliary base 12 is not connected to the main body 2, and the bases 11, 12 are connected together by a pair of right and left connection rods 13, 13. A lower plate 21 that covers the lower surfaces of the main base 11 and the auxiliary base 12 is not shown in the bottom views of FIGS. 5C and 7C.

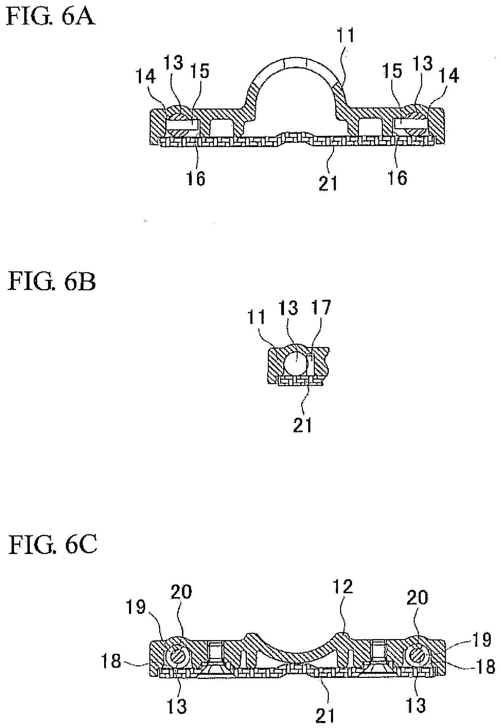

The front end of the connection rod 13, which is located on the main base 11 side, is loosely disposed in a front slide hole 14 that is formed to extend forward from the rear surface of the main base 11. As also shown in FIG. 6A, a stopper pin 15 is provided, by press-fitting, in the front end of the connection rod 13 so as to be perpendicular to the connection rod 13 and protrude inward therefrom, and the stopper pin 15 is fitted in a longitudinal guide groove 16 that is provided continuously with the front side of the front slide hole 14. This allows the connection rod 13 to slide in the longitudinal direction with respect to the main base 11 between an advanced position where the front end of the connection rod 13 contacts the front inner end of the front slide hole 14 and a retracted position where the stopper pin 15 reaches the rear end of the guide groove 16. As shown in FIG. 6B, a rubber pin 17 is accommodated in the main base 11 so as to perpendicularly contact one of the connection rods 13. The rubber pin 17 provides resistance to sliding of the connection rod 13, thereby positioning the connection rod 13 at a predetermined slide position.

The rear end of the connection rod 13, which is located on the auxiliary base 12 side, is loosely disposed in a rear slide hole 18 that is formed to extend rearward from the front surface of the auxiliary base 12. As also shown in FIG. 6C, a groove 19 is provided in the outer periphery of the rear end of the connection rod 13 so as to be recessed in a ring shape. An engagement protrusion 20 protruding from the inner surface of the rear slide hole 18 engages with the groove 19. Thus, the auxiliary base 12 is connected to the connection rod 13 so as to be integral therewith, which allows the auxiliary base 12 to slide together with the connection rod 13 in the longitudinal direction. That is, the auxiliary base 12 is slidable between a first position where the connection rod 13 is located at the advanced position and the auxiliary base 12 contacts the main base 11, and a second position where the connection rod 13 is located at the retracted position and the auxiliary base 12 is separated from the main base 11.

In the jigsaw 1 configured as described above, as shown in FIG. 7, sliding the auxiliary bases 12, 12 rearward from the first position causes the connection rods 13, 13 to slide from the advanced position to the retracted position, whereby the auxiliary base 12 can be set to the second position away from the rear part of the main base 11. Thus, the overall shape of the base 10 can be extended in the longitudinal direction. Consequently, the attitude of the main body 2 can be stably maintained by the auxiliary base 12 when placing the base 10 on a workpiece and cutting the workpiece while sliding the base 4. In particular, when the jigsaw 1 is turned upside down to cut the workpiece from its back surface side, the main body 2 can be stably moved with the auxiliary base 12 being slid rearward, even if the jigsaw 1 is not visible. This configuration thus reduces the possibility that the main body 2 is tilted.

As described above, in the jigsaw 1 of the second embodiment, a part of the base 10 serves as the auxiliary base 12 separate from the main base 11 that is connected to the main body 2. The auxiliary base 12 is connected to the main base 11 so as to be movable between the first position where the auxiliary base 12 contacts the main base 11 and the second position where the auxiliary base 12 is separated from the main base 11. Thus, in the jigsaw 1 of the second embodiment as well, the attitude of the main body 2 during a cutting operation can be stabilized while the lightweight, compact base 10 is still implemented. Accordingly, cutting accuracy can also be maintained.

In the second embodiment, the connection structure between each connection rod and the main and auxiliary bases is not limited to the above-described structure, and design can be changed as appropriate. For example, a stopper pin may be provided in the main base, and a slide groove in which the stopper pin is fitted may be formed in the connection rod. A screw, a pin, etc. may be used to connect the auxiliary base to the connection rod.

The present teachings are not limited to the configuration in which the auxiliary base is placed rearward of the main base. The auxiliary base may be slidably placed forward of or on the lateral side of the main base.

## Claims

1. A jigsaw (1) in which a base (4) is connected to a lower part of a main body (2), provided with a blade (3) protruding downward, wherein
the base (4) is provided with an auxiliary base (6) that is capable of being inserted into and pulled out from the base (4) in a plane parallel to a lower surface of the base (4) by moving the auxiliary base (6) between an accommodated position where the auxiliary base (6) is located in an accommodating portion (7) recessed in the lower surface of the base (4) and fits within the base (4) as viewed in plan, and a pulled-out position where the auxiliary base (6) protrudes from the accommodating portion (7) to outside of the base (4),
**characterized in that**
the auxiliary base (6) is provided on right and left sides of the base (4).

2. The jigsaw according to claim 1, wherein
the auxiliary base (6) is rotatably connected, at one end thereof, to the base (4) in the accommodating portion (7) via a shaft (8), so that the auxiliary base (6) is rotatable between the accommodated position and the pulled-out position.

3. The jigsaw according to claim 2, wherein
the shaft (8) that connects the auxiliary base (6) to the base (4) is provided with an O-ring (8a) that contacts an upper surface of the auxiliary base (6).

4. The jigsaw according to any one of claims 1 to 3, wherein
the auxiliary base (6) is a plate-like body having an elliptical shape as viewed in plan.

5. A jigsaw (1) in which a base (10) is connected to a lower part of a main body (2) provided with a blade (3) protruding downward, wherein
a part of the base (10) serves as an auxiliary base (12) separate from a main base (11) that is connected to the main body (2),
**characterized in that**
the auxiliary base (12) is connected to the main base (11) so as to be movable between a first position where the auxiliary base (12) contacts the main base (11) and a second position where the auxiliary base (12) is separated from the main base (11).

6. The jigsaw according to claim 5, wherein
a connection rod (13) is slidably connected, at one end thereof, to the main base (11) and is inserted and connected, at another end thereof, to the auxiliary base (12), so that the auxiliary base (12) is movable between the first position and the second position with the connection rod (13).

7. The jigsaw according to claim 6, wherein
a pair of the connection rods (13) are provided.

8. The jigsaw according to claim 6 or 7, wherein
a rubber pin (17) that contacts the connection rod (13) is accommodated in the main base (11).

9. The jigsaw according to any one of claims 5 to 8, wherein
the auxiliary base (12) is provided rearward of the main base (11).

## Patentansprüche

1. Stichsäge (1), bei welcher eine Basis (10) mit einem unteren Teil eines Hauptkörpers (2), der mit einem Schneidblatt (3) vorgesehen ist, das nach unten vorsteht, verbunden ist, bei der
die Basis (4) mit einer Zusatzbasis (6) vorgesehen ist, die in einer Ebene parallel zu einer unteren Oberfläche der Basis (4) durch Bewegen der Zusatzbasis (6) zwischen einer aufgenommenen Position, bei welcher sich die Zusatzbasis (6) in einem Aufnahmebereich (7) befindet, der in der unteren Oberfläche der Basis (4) ausgenommen ist, und innerhalb der Basis (4) in einer Draufsicht passt, und einer herausgezogenen Position, bei welcher die Zusatzbasis (6) aus dem Aufnahmeteil (7) zu der Außenseite der Basis (4) vorsteht, in die Basis (4) eingeführt und von dieser herausgezogen werden kann
**dadurch gekennzeichnet, dass**
die Zusatzbasis (6) an der rechten und linken Seite der Basis (4) vorgesehen ist.

2. Stichsäge nach Anspruch 1, bei der
die Zusatzbasis (6) an einem Ende derselben mit der Basis (4) in dem Aufnahmebereich (7) mittels eines Schaftes (8) drehbar verbunden ist, so dass die Zusatzbasis (6) zwischen der aufgenommenen Position und der herausgezogenen Position drehbar ist.

3. Stichsäge nach Anspruch 2, bei der
der Schaft (8), der die Zusatzbasis (6) mit der Basis (4) verbindet, mit einem O-Ring (8a) vorgesehen ist, der eine obere Oberfläche der Zusatzbasis (6) berührt.

4. Stichsäge nach einem der Ansprüche 1 bis 3, bei der
die Zusatzbasis (6) ein plattenähnlicher Körper ist, der eine elliptische Form in einer Draufsicht aufweist.

5. Stichsäge (1) bei welcher eine Basis (10) mit einem unteren Teil eines Hauptkörpers (2), der mit einem Schneidblatt (3) vorgesehen ist, das nach unten vorsteht, verbunden ist, bei der
ein Teil der Basis (10) als eine Zusatzbasis (12) separat von einer Hauptbasis (11), die mit dem Hauptkörper (2) verbunden ist, dient
**dadurch gekennzeichnet, dass**
die Zusatzbasis (12) mit der Hauptbasis (11) derart verbunden ist, dass sie zwischen einer ersten Position, bei welcher die Zusatzbasis (12) die Hauptbasis (11) berührt, und einer zweiten Position bewegbar ist, bei welcher die Zusatzbasis (12) von der Hauptbasis (11) separiert ist.

6. Stichsäge nach Anspruch 5, bei der
ein Verbindungsstab (13) an einem Ende desselben mit der Hauptbasis (11) gleitbar verbunden ist und an seinem anderen Ende in die bzw. mit der Zusatzbasis (12) eingeführt und verbunden ist, so dass die Zusatzbasis (12) zwischen der ersten und der zweiten Position mittels des Verbindungsstabes (13) bewegbar ist.

7. Stichsäge nach Anspruch 6, bei der
ein Paar der Verbindungsstäbe (13) vorgesehen ist.

8. Stichsäge nach Anspruch 6 oder 7, bei der
ein Gummistift (17), der den Verbindungsstab (13) berührt, in der Hauptbasis (11) aufgenommen ist.

9. Stichsäge nach einem der Ansprüche 5 bis 8, bei der
die Zusatzbasis (12) an der Rückseite der Hauptbasis (11) vorgesehen ist.

## Revendications

1. Scie sauteuse (1) dans laquelle une base (4) est reliée à une partie inférieure d'un corps principal (2) munie d'une lame (3) faisant saillie vers le bas, et dans laquelle
la base (4) est munie d'une base auxiliaire (6) qui peut être insérée dans et hors de la base (4) dans un plan parallèle à une surface inférieure de la base (4) en déplaçant la base auxiliaire (6) entre une position logée où la base auxiliaire (6) est située dans une partie de logement (7) encastrée dans la surface inférieure de la base (4) et s'insère à l'intérieur de la base (4) tel que vue en plan, et une position sortie où la base auxiliaire (6) fait saillie de la partie de logement (7) vers l'extérieur de la base (4),
**caractérisé en ce que** la base auxiliaire (6) est prévue sur les côtés droit et gauche de la base (4).

2. Scie sauteuse selon la revendication 1, dans laquelle
la base auxiliaire (6) est reliée de manière rotative, à une extrémité de celle-ci, à la base (4) dans la partie de logement (7) par l'intermédiaire d'un arbre (8), de sorte que la base auxiliaire (6) puisse tourner entre la position logée et la position sortie.

3. Scie sauteuse selon la revendication 2, dans laquelle
l'arbre (8) qui relie la base auxiliaire (6) à la base (4) est pourvu d'un joint torique (8a) qui vient en contact avec une surface supérieure de la base auxiliaire (6).

4. Scie sauteuse selon l'une quelconque des revendications 1 à 3, dans laquelle
la base auxiliaire (6) est un corps en forme de plaque ayant une forme elliptique tel que vue en plan.

5. Scie sauteuse (1) dans laquelle une base (10) est reliée à une partie inférieure d'un corps principal (2) munie d'une lame (3) faisant saillie vers le bas, et dans laquelle
une partie de la base (10) sert de base auxiliaire (12) séparée d'une base principale (11) qui est relié au corps principal (2),
**caractérisée en ce que**
la base auxiliaire (12) est reliée à la base principale (11) de manière à être mobile entre une première position où la base auxiliaire (12) est en contact avec la base principale (11) et une deuxième position où la base auxiliaire (12) est séparée de la base principale (11).

6. Scie sauteuse selon la revendication 5, dans laquelle
une tige de connexion (13) est reliée de manière coulissante, à l'une de ses extrémités, à la base principale (11) et est insérée et reliée, à une autre de ses extrémités, à la base auxiliaire (12), de sorte que la base auxiliaire (12) est mobile entre la première position et la deuxième position avec la tige de connexion (13).

7. Scie sauteuse selon la revendication 6, où
une paire de tiges de connexion (13) est fournie.

8. Scie sauteuse selon la revendication 6 ou 7, dans laquelle
une goupille en caoutchouc (17) qui vient en contact avec la tige de connexion (13) est logée dans la base principale (11).

9. Scie sauteuse selon l'une quelconque des revendications 5 à 8, dans laquelle
la base auxiliaire (12) est prévue à l'arrière de la base principale (11).
